# EUROPEAN PATENT APPLICATION

(11) **EP 2 046 009 A1**
(43) Date of publication of application: **08.04.2009**
(21) Application number: 08250201.4
(22) Date of filing: 16.01.2008
(51) Int. Cl.: H04M 3/56

(54) **Audio conferencing announcements**

(30) Priority: 05.10.2007 US 905984
(71) Applicant: British Telecommunications public limited company, 81 Newgate Street London EC1A 7AJ (GB)
(72) Inventor: The designation of the inventor has not yet been filed
(74) Representative: Lidbetter, Timothy Guy Edwin

(57) **Abstract**

An audio conferencing facility has a database for storing user data relating to authorisation to use the facility, and provides storage for a name file to be stored as part of the user data, which may be retrieved for generation of an audio signal to be played to one or more of the participants to a communication connection whenever that participant uses the conferencing facility. The name may be generated as an audio recording by the user, or entered as text, or retrieved from a directory in text form. It may be stored either in audio form or as text, for conversion to audio using a speech synthesiser.
The name file may be played to the user on accessing the system, and/or to other participants when he joins or leaves a conference. By storing the name file for reuse in many conferences, the access to each conference is simplified. It also allows listeners-in to conferences to be announced in circumstances where speaking may be difficult because of background noise, speech impairment etc.

## Description

This invention relates to audio conferencing facilities. Such facilities provide the capability for a number of users to participate in a discussion by connecting through a single point of contact. Typical services allow each user to establish connection to a conference call platform. The platform provides a bridge through which all the callers can be connected so that each one can hear what is said by each of the others. Typically, such platforms provide facilities to prevent cross talk, feedback, etc, and may also provide a spatialisation capability to allow different participants' voices to seem to emanate from different loudspeakers.

It is known to use a recorded speech file to announce a user when he joins a conference. The speech files can also be used to announce to a joiner, immediately before he is connected to the conference, the names of those people already taking part, and can also announce the identities of people as they disconnect from the system. However, in existing systems the user generates the speech file at the time of joining the conference.

According to the invention, there is provided a registration process to allow a user access to a communications facility, comprising the step of recording a name file to be linked to a record of the user maintained on a database, for subsequent playback when the user accesses the facility. According to a related aspect, there is provided a process for providing access to communications facilities for a user, wherein when the user accesses the facility, a database containing a record of user data is accessed; a name file associated with the user is accessed from the database, and the name file is played as part of an audio message to one or more parties to a conference call.

The invention also provides a communications facility having means for controlling access thereto, comprising a registration means for generating user data relating to authorisation to use the facility, a user database to store user data generated by the registration means, and a connection server for retrieving data from the user database and controlling communications connections between users, wherein the registration means comprises recording means for generating a name file to be stored as part of the user data, and the connection server comprises retrieval means for retrieving a name file from the database and playback means for generating, from the name file, an audio signal to be played to one or more of the participants to a communication connection.

Thus a user may record his name as part of a registration process to allow access to the conferencing facilities, and this recording is linked to a record of the user maintained on a database for subsequent playback whenever the user accesses the facility. The database may record other data to authenticate the identity of a user accessing the facility: for example it may be linked to a record of the user's ANI (automatic number identification - also known as CLI - calling line identity).

Depending on the facilities available to the user, the name file may be generated by recording an audio input generated by the user, or by entering text input, for example it by a manual data entry means, such as a keyboard. Alternatively, if the user's name is accessible from an existing database, a text file may be generated from that on initial registration. However, the wide variety in pronunciation of personal names makes the spoken option the preferred one.

The name file may be played to participants to the conference at any suitable point, for example to the user whose name file it is, to welcome them to the system, or to other users to announce the arrival or departure of the user from the conference.

By linking a name file to the user's record the user does not need to go through the step of announcing himself every time he joins a conference. This is particularly useful if a participant has a speech impairment, or is in a noisy environment where it may be difficult to be heard but from where, by use of headphones, he can quite easily listen in to the conference. The linking of the speech file to the user's identity also acts as confirmation that participants to a conference are who they claim to be. The speech file may also be used to personalise a greeting to a user when he accesses the system.

An embodiment of the invention will be described by way of example, with reference to the drawings, in which:
Figure 1 is a schematic diagram of the interactions which take place to establish a conferencing facility for a user
Figure 2 is a schematic diagram of the interactions which take place when a user connects to a conference using a previously-established facility.
Figure 3 is a schematic diagram of a variant of the embodiment of Figure 2

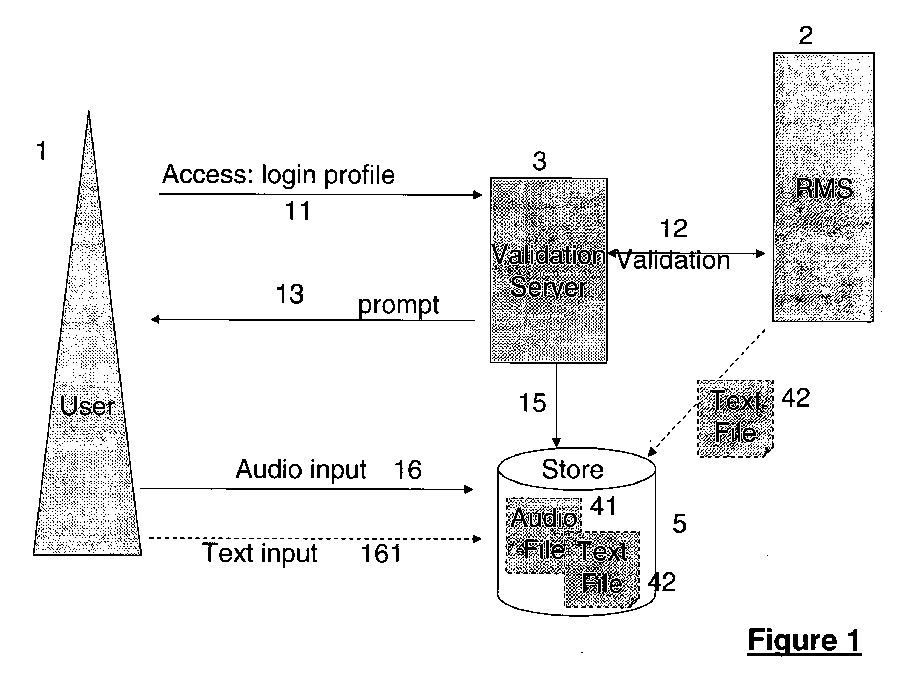

Figure 1 shows the interactions between a user terminal 1 and the various network-based elements which co-operate to establish the facility. These are a reservations management system (RMS) 2, a validation server 3 and the conference service platform 4 itself.

The process requires a user to first register his terminal 1 with the conferencing service platform 4. This registration process only needs to be done once, and thereafter the user can access the service as often as he requires, without repeating this registration step. The registration process records the user's ANI (automatic number identification - also known as CLI - calling line identity). Once the user has registered his phone with the platform, he should be able to dial into a defined phone number, and be recognized, from the phone ANI, as authorised to use the service. Access to the user's account can thus be achieved with minimal key strokes

The registration process also allows a user to create unique credentials for authentication when using the service via a phone other than one that has already been registered, providing flexibility to users and enhancing the usability of the service. During the registration process the user is permitted to create a security code, that coupled with the Profile Number would authenticate the user. These credentials allow users to come back to a designated web site to update their various configurations. For instance, if a user changes jobs, he may want to configure passcodes for other colleagues so that they can join conferences he is hosting.

The registration process, by which the data is pre-programmed to the reservations management system, has two variants, depending on whether any of the user data can be made available to the reservations management database 2 from a central source or whether the users have to provide all the data. Central provision may be done, for example, by loading the details of authorised users into the database of the reservations management system from some other source, such as a company's internal telephone directory or other Human Resource database.

When the user of a terminal 1 chooses to register with the service, to allow him to make use of the facility, he accesses the validation server 3 (step 11). The user then provides sufficient data to identify him: this may include name, email address, the user's billing account number, and the phone number of the bridge to which the account is to be connected (preferably a toll free number), a Security PIN (a unique identifier assigned to a company account set up in the reservations management system that can be used for online portals to confirm that a visitor to the website belongs to the company they say they do) and the user's ANI.

The user transmits this data 11 to the validation server 3, which validates the information against what is held in the reservations management database 2 (step 12). The validation server 3 uses the billing Number and Company Security PIN to check that the user is authorized to register. Additional data may be automatically derived from the user-provided data 11 by retrieval of data from the reservations management system 2 during the registration process 12. For example, the user's ANI may be compared with a list of authorised numbers to retrieve the user's other details.

Correctly validated user data is then stored in a database 5 (step 15) for subsequent retrieval. If the validation step 12 fails, the validation server 3 executes further exchanges with the user to help him enter the data properly.

When validation succeeds, the validation server 3 generates a prompt 13 for the user to generate a voice announcement 16 for use in any future use of the facility. This announcement is recorded and maintained as an audio file 41 in the database 5 with the ANI and other data relating to the user.

Instead of an audio recording 41, the user may generate a text message 161 which is again stored, as a text file 42, in the database 5. A further variant allows such a text file 42 representing the user's name to be retrieved from the reservations management system database 2 as part of the validation process 12, 15, again for storage in the database.

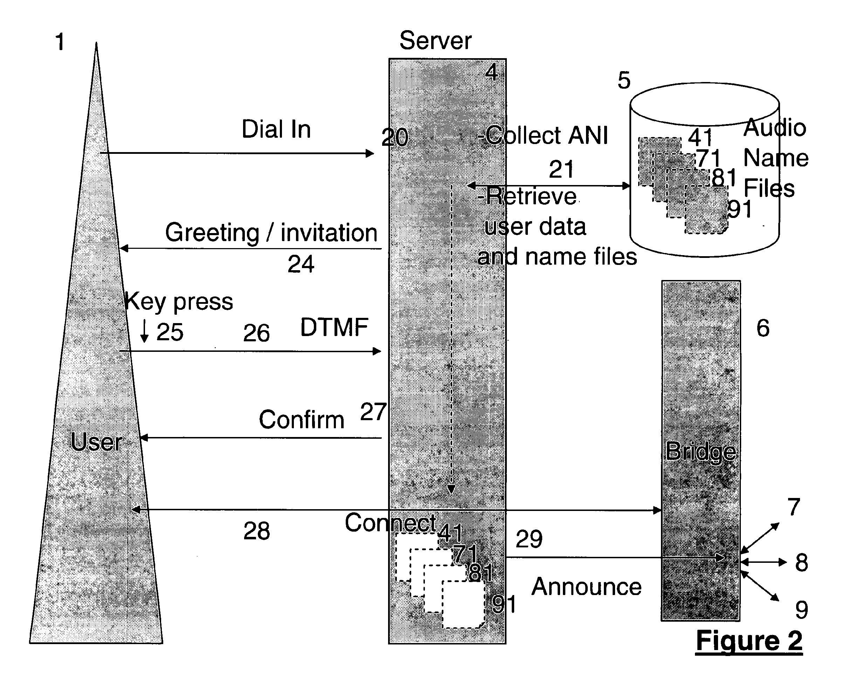

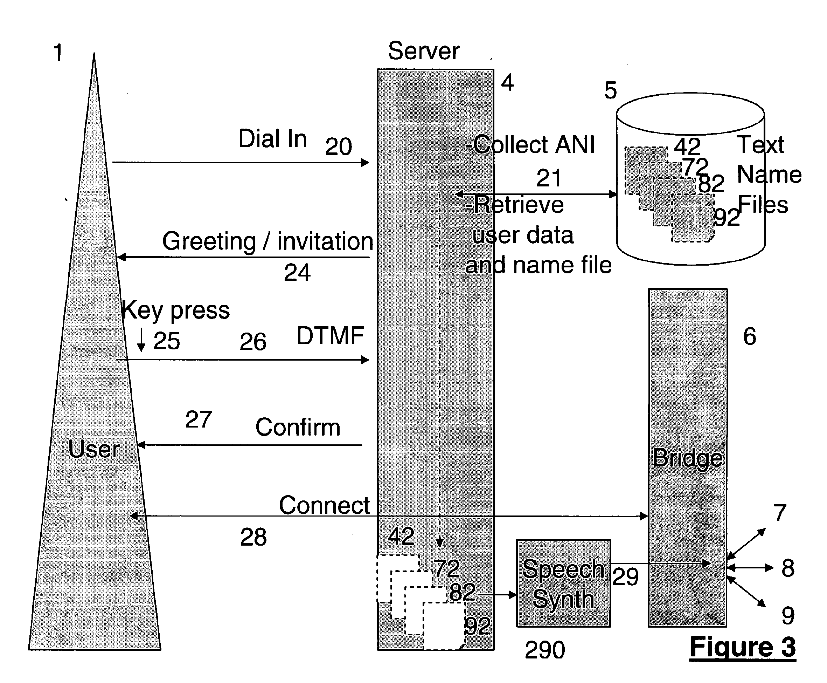

Once a user is authorised to use the conference facility, he may now use it to connect to a specific conference residing on a bridge 6, as will now be described with reference to Figures 2 and 3.

The user first uses the previously-registered terminal 1 to dial into a dedicated conference phone number (step 20). This number is advised to the user as part of the registration process. The number may be stored in the terminal 1 using short-code or voice-activated dialling to simplify connection.

An Interactive Voice Response system forming part of the server 4 collects the user's ANI, and collects user information associated with that ANI from the database 5 (step 21). This data includes the voice file 41 (Figure 2) or text file 42 (Figure 3) previously stored (steps 16, 161).

The server 4 then generates a message 24 greeting the user, and instructing the user to press a key on his telephone's keypad to open his account. A user 1 may register to access more than one conference, in which case, as part of the welcome message 24, the user 1 is invited to identify the conference to which he wishes to be connected: for example different keystrokes 25 on the user terminal 1 may be used to initiate connection to different conferences on the bridges 6.

In response to the required keystroke (25), the server requests the user to wait to be joined into his conference, and initiates a dial-out to the user's bridge 6, (step 28). The server 4 then generates an announcement 29 that the user 1 is about to join the conference. During this process, some comfort noise or holding message 27 may be played into the user's line to confirm that he has not been disconnected.

In the embodiment of Figure 2, an audio file 41 is used directly to form part of a voice message. It may be incorporated in the greeting 24 transmitted to the user on first connection, to personalise the system and confirm to the user that it is his own account that he has been connected to. It may also be transmitted as part of the announcement 29 to any users 7, 8, 9 already connected thereto, to announce the arrival of the newcomer 1. The holding message 27 may similarly include identification of any other users 7, 8, 9 who are already connected, using similar voice files 71, 81, 91 associated with their accounts. On disconnection of a user, the voice file may be used as part of a message to inform any remaining users of the departure.

Such messages can be generated by a speech synthesiser, incorporating the user name as a voice file 41 at the appropriate point in the message.

In the alternative embodiment of Figure 3, the user's name is stored as a text file 42, and fed to a speech synthesiser 7 (step 290) to generate an audio signal (29), incorporating the user's name as part of the text of the message to be synthesised.

The audio variant, generated by the user himself, ensures that the user's name is pronounced in the way he wishes. However, the text file allows easier integration with the rest of the message, and can be generated in circumstances, such as a noisy environment, in which generation of an audio file may be difficult.

## Claims

1. A registration process to allow a user access to a communications facility, comprising the step of recording a name file to be linked to a record of the user maintained on a database, for subsequent playback when the user accesses the facility.

2. The process according to claim 1 wherein the database records identity authentication data relating to the user

3. The process according to claim 1 or claim 2, wherein the name file is generated by recording an audio input generated by the user

4. The process according to claim 1 or claim 2, wherein the name file is generated by recording a text input suitable for conversion to an audio output by a speech synthesiser.

5. The process according to claim 4, wherein the text input is retrieved from a database

6. The process according to claim 4, wherein the text input is generated by manual entry using a keyboard.

7. A process for providing access to communications facilities for a user, wherein when the user accesses the facility, a database containing a record of user data is accessed, a name file associated with the user is accessed from the database, and the name file is played as part of an audio message to one or more parties to a conference call.

8. A process according to claim 7, wherein the name file is stored as an audio file.

9. A process according to claim 7, wherein the name file is stored as a text file, and converted to an audio signal by speech synthesis.

10. A process according to claim 7, wherein the name file is played to participants to the conference other than the user associated with the name file, before the user is connected.

11. A process according to claim 7, wherein the name file is played to the user with whom the name file is associated, as part of the connection process.

12. A process according to claim 7, wherein after a user disconnects from a call, the name file with whom that user is associated is played to the remaining participants to the call.

13. A communications facility having means for controlling access thereto, comprising a registration means for generating user data relating to authorisation to use the facility, a user database to store user data generated by the registration means, and a connection server for retrieving data from the user database and controlling communications connections between users, wherein the registration means comprises recording means for generating a name file to be stored as part of the user data, and the connection server comprises retrieval means for retrieving a name file from the database and playback means for generating, from the name file, an audio signal to be played to one or more of the participants to a communication connection.

14. The facility according to claim 13 comprising audio input means for receiving audio data from a user, the database comprising audio storage means for the audio data, and the retrieval means being arranged to play the audio file.

15. The facility according to claim 13, comprising text input means for receiving text data, the database comprising storage means for the text data, and the retrieval means comprising a speech synthesiser for converting the text data into an audio output

16. The facility according to claim 15, wherein the text input is retrieved from a database of users.

17. The facility according to claim 15, comprising means for receiving the text input from a user terminal.

18. The facility according to claim 13, 14, 15, 16 or 17, wherein the playback means is arranged to play the name file to participants to the conference other than the user associated with the name file" before that user is connected.

19. The facility according to claim 13, 14, 15, 16 or 17, wherein the playback means is arranged to play the name file to the user with whom the name file is associated, as part of the connection process.

20. The facility according to claim 13, 14, 15, 16 or 17, wherein the playback means is arranged to play the name file, after the user with whom the name file is associated disconnects from a call to any remaining participants to the conference.
